**Europäisches Patentamt**

**European Patent Office**

**Office européen des brevets**

(11) Veröffentlichungsnummer: **0 464 389 A1**

# EUROPÄISCHE PATENTANMELDUNG

(21) Anmeldenummer: **91109248.4**

(22) Anmeldetag: **06.06.91**

(51) Int. Cl.5: **F16K 15/04**

(30) Priorität: **05.07.90 DE 4021469**

(43) Veröffentlichungstag der Anmeldung:
**08.01.92 Patentblatt 92/02**

(84) Benannte Vertragsstaaten:
**DE ES GB IT**

(71) Anmelder: **ROBERT BOSCH GmbH**
**Postfach 10 60 50**
**W-7000 Stuttgart 10(DE)**

(72) Erfinder: **Megerle, Friedrich, Dipl.-Ing.**
**Ahornweg 13**
**W-7144 Asperg(DE)**
Erfinder: **Fees, Hans-Jörg, Dipl.-Ing.**
**Setzinger Weg 13/3**
**W-7120 Bietigheim-Bissingen(DE)**
Erfinder: **Eichhorn, Alexander, Dipl.-Ing.**
**Kernerstrasse 6**
**W-7129 Ilsfeld(DE)**
Erfinder: **Hohl, Günther, Dipl.-Ing.**
**Seerosenstrasse 51**
**W-7000 Stuttgart 80(DE)**
Erfinder: **Käs, Günter**
**Markelsheimer Strasse 70**
**W-7000 Stuttgart 40(DE)**

(74) Vertreter: **Knetsch, Manfred et al**
**Postfach 10 60 50**
**W-7000 Stuttgart 10(DE)**

(54) **Rückschlagventil.**

(57) Es soll ein geräuscharmes Schließen des Ventiles erzielt werden.

Das Rückschlagventil (1) hat einen gehäuseseitigen Ventilsitz (4), dem eine Kugel (11) als Schließglied zugeordnet ist. Die Kugel (11) ist in einer durch einen Boden (18) und einen kragenförmigen Abschnitt (22) begrenzten Ausnehmung (24) eines federbelasteten Stützteils (12) längsbewegbar aufgenommen.

Beim Schließen des Rückschlagventils (1) liegt das Stützteil (12) aufgrund Federwirkung am Gehäuse (2) an. Die Kugel (11) wird frei von Federkräften durch den Druck des Mediums vom Boden (18) des Stützteils (12) abgehoben und an den Ventilsitz (4) angelegt. Dabei werden störende Schwingungen der Kugel (11) vermieden.

Stand der Technik

Die Erfindung geht aus von einem Rückschlagventil nach der Gattung des Hauptanspruchs.

Es ist bereits ein derartiges Rückschlagventil vorgeschlagen worden (DE-Patentanmeldung P 39 26 915.9), bei dem zum Zwecke der Geräuschminderung eine als Schließglied dienende Kugel bis zum Großkreis von einem kragenförmigen Abschnitt eines federbelasteten Stützteils umgriffen ist. Bei geöffnetem Ventil wird daher das Druckmedium strömungsgünstig von der ventilsitzseitigen, freien Kugeloberfläche über den kragenförmigen Abschnitt des Stützteils abgeleitet und ein Schwingen der bewegbaren Ventilteile vermieden. Es hat sich aber gezeigt, daß beim Schließen des Rückschlagventils unter ungünstigen Bedingungen Schwingungen mit der Folge störender Geräuschentwicklung auftreten können.

Vorteile der Erfindung

Das erfindungsgemäße Rückschlagventil mit dem kennzeichnenden Merkmal des Hauptanspruchs hat demgegenüber den Vorteil, daß die Kugel am Ende des Schließhubes des Rückschlagventils federkraftfrei ist und lediglich durch von Druckunterschieden hervorgerufene Kräfte in ihre Schließstellung bewegt wird ohne intensiven Schwingungen ausgesetzt zu sein, welche störende Geräusche hervorrufen könnten. Das Rückschlagventil ist daher in vorteilhafter Weise z. B. in hy-draulischen Fahrzeugbremsanlagen mit Blockier-schutzregeleinrichtungen und/oder Antriebsschlupf-begrenzungseinrichtungen einsetzbar, welche bei Aktivierung keine Schwingungsanregung der Fahrgastzelle hervorrufen sollen.

Durch die in den Unteransprüchen aufgeführten Maßnahmen sind vorteilhafte Weiterbildungen und Verbesserungen des im Hauptanspruch angegebenen Rückschlagventils möglich.

Dabei hat sich gezeigt, daß das schwingungsarme Verhalten der Kugel bereits bei der im Anspruch 2 angegebenen, fertigungstechnisch einfach erzeugbaren Abmessung erreicht wird.

Die im Anspruch 3 gekennzeichnete Maßnahme ist insofern vorteilhaft, weil damit eine Zentrierung und Längsführung der Kugel im Stützteil bewirkt wird, welche ein zentrisches Auftreffen der Kugel auf den Ventilsitz begünstigt. Diese Maßnahme trägt daher zur Erhöhung der Funktionsdauer des Rückschlagventils bei.

Die im Anspruch 4 gekennzeichnete Weiterbildung des Rückschlagventils hat den Vorteil, daß einerseits eine strömungsgünstige Ableitung des Druckmediums über die freie Kugeloberfläche und den kragenförmigen Stützhülsenabschnitt sowie Ventilsitz und Gehäusebohrungsabschnitt und andererseits eine axiale Begrenzung des Stützteilhubes beim Schließen des Rückschlagventiles erzielt wird. Die unvollständige Abdichtung verhindert eine Schwingungsanregung der Hülse.

Schließlich hat die im Anspruch 5 angegebene Maßnahme den Vorteil, daß die geräuschdämpfende Eigenschaft des Kunststoff beim Zusammenwirken des Stützteils mit der Kugel und dem Gehäuse des Rückschlagventils genutzt wird.

Zeichnung

Ein Ausführungsbeispiel der Erfindung ist in der einen Längsschnitt eines Rückschlagventils zeigenden Zeichnung vereinfacht dargestellt und in der nachfolgenden Beschreibung näher erläutert.

Beschreibung des Ausführungsbeispiels

Ein mit 1 bezeichnetes Rückschlagventil ist in einem Gehäuse 2 aus Stahl angeordnet, welches eine Zuströmöffnung 3 für ein gasförmiges oder flüssiges Druckmedium aufweist. Die Zuströmbohrung 3 mündet in einen hohlkegelförmigen Ventilsitz 4. An diesen schließt sich ein ebenfalls hohlkegelförmig begrenzter Abschnitt 5 einer gleichachsig zur Zuströmbohrung 3 verlaufenden Gehäusebohrung 6 größeren Durchmessers an. Der Abschnitt 5 besitzt einen etwas größeren Kegelwinkel als der Ventilsitz 4. Die Bohrung 6 ist an ihrem vom Ventilsitz 4 abgewandten Ende mit einem Verschlußteil 7 abgeschlossen. Außerdem weist das Gehäuse 2 eine parallel zur Bohrung 6 verlaufende und diese umfangsseitig aufschneidende Abströmbohrung 8 auf, so daß in der Bohrung 6 befindliches Druckmedium in die Abströmbohrung 8 übertreten kann und umgekehrt.

Das Rückschlagventil 1 hat ein dem Ventilsitz 4 zugeordnetes Schließglied in Form einer in der Bohrung 6 angeordneten Kugel 11 aus gehärtetem Stahl. In der Bohrung 6 befinden sich außerdem ein hülsenförmiges Stützteil 12 für die Aufnahme der Kugel 11 und eine Feder 13. Die als Schraubendruckfeder ausgebildete Feder 13 ist auf einem Zapfen 14 des Verschlußteils 7 geführt, gegen das sie sich mit ihrem einen Ende abstützt, während sie mit ihrem anderen Ende am Stützteil 12 angreift. Die Zuströmbohrung 3, der Ventilsitz 4, der Bohrungsabschnitt 5, die Bohrung 6, das Verschlußteil 7, die Kugel 11, das Stützteil 12 und die Feder 13 sind gleichachsig zur Längsachse 15 des Rückschlagventils 1 angeordnet.

Das aus glasfaserverstärktem Polyamid bestehende, rotationssymmetrisch ausgebildete Stützteil 12 ist mit geringem Seitenspiel in der Druckmedium enthaltenden Bohrung 6 des Gehäuses 2 geführt. Das Stützteil 12 ist entgegen der Kraft der Feder 13 in der Bohrung 6 längsbewegbar. Das hülsenförmige Stützteil 12 besitzt ventilsitzseitig einen Boden 18 mit einem mittig angeordneten Durchbruch 19 kleinen Durchmessers. Auf der vom Ventilsitz 4 abgewandten Seite des Bodens 18 greift die Feder 13 an. Gegen den Ventilsitz 4 ist der Boden 18 als gleichachsig zum Durchbruch 19 verlaufender Hohlkegelsitz 21 ausgebildet. Außerdem ist das Strützteil 12 vom Boden 18 ausgehend mit einem kragenförmigen Abschnitt 22 versehen. Auf seiner Außenseite ist der kragenförmige Abschnitt 22 unter einem schlanken Winkel kegelförmig verjüngt ausgebildet und endet in einer etwa schneidenförmigen Umlaufkante 23. Von dieser ausgehend bildet der innen kreiszylindrisch begrenzte kragenförmige Abschnitt 22 eine Ausnehmung 24 für die Kugel 11 des Rückschlagventils 1.

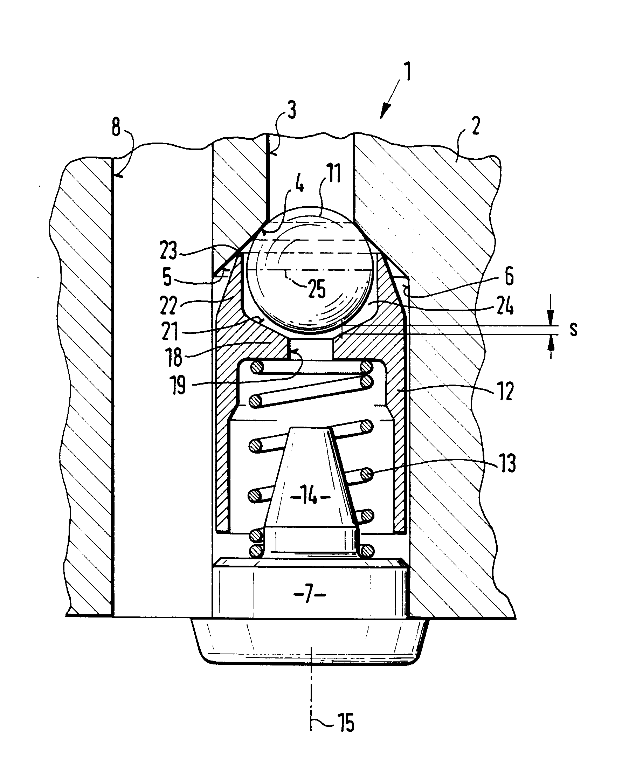

Wie aus der Zeichnung deutlich erkennbar ist, umfaßt das Stützteil 12 mit seinem kragenförmigen Abschnitt 22 die Kugel 11 ventilsitzseitig bis über deren Großkreis 25, wenn das Rückschlagventil 1 seine gezeichnete Schließstellung einnimmt. In dieser Schließstellung ist das Stützteil 12 aufgrund der Wirkung der Feder 13 gegen den Ventilsitz 4 bewegt, so daß sich die Umlaufkante 23 des kragenförmigen Abschnittes 22 am hohlkegelförmigen Abschnitt 5 der Gehäusebohrung 6 abstützt. Da in der Schließstellung des Rückschlagventils 1 der Druck des Mediums in der Bohrung 6 den Druck in der Zuströmbohrung 3 übersteigt, ist die Kugel 11 aufgrund der durch diesen Druckunterschied hervorgerufenen Kräfte vom Boden 18 des Stützteils 12 abgehoben und am hohlkegelförmigen Ventilsitz 4 abgestützt. Dabei tritt zwischen der Kugel 11 und dem Bereich des Hohlkegelsitzes 21 am Boden 18 des Stützteils 12, an dem die Kugel bei geöffnetem Rückschlagventil 1 anzugreifen vermag, ein axiales Spiel s auf, welches bei einem Kugeldurchmesser von z. B. 2,5 mm vorzugsweise 0,1 mm beträgt. Außerdem ist erkennbar, daß die Kugel 11 ein geringes radiales Spiel zum Innenumfang des kragenförmigen Abschnittes 22 des Stützteils 12 hat. Dadurch wird zum einen eine leichte Längsbewegbarkeit der Kugel 11 in der Ausnehmung 24 des Stützteiles 12 und andererseits eine widerstandsfreie Zentrierung der Kugel 11 am Ventilsitz 4 erreicht.

Wenn der Druck des Mediums in der Zuströmbohrung 3 den Druck in der Gehäusebohrung 6 überwiegt, wird die Kugel 11 vom Ventilsitz 4 abgehoben und gegen den Hohlkegelsitz 21 am Boden 18 des Stützteils 12 bewegt. Anschließend wird das Strützteil 12 mit der Kugel 11 durch den Druck des Mediums entgegen der Kraft der Feder 13 bis zum Anschlag am Verschlußteil 7 in die Offenstellung des Rückschlagventiles 1 bewegt, so daß das Druckmedium von der Zuströmbohrung 3 über die freie Kugeloberfläche und den kragenförmigen Abschnitt 22 des Stützteils 12 hinweg durch die Bohrung 6 des Gehäuses 2 in die Abströmbohrung 8 fließen kann.

Läßt der Druck in der Zuströmbohrung 3 nach, so wird das Stützteil 12 mit der Kugel 11 durch die Feder 13 gegen den Ventilsitz 4 bewegt. Dabei trifft das Stützteil 12 mit der Umlaufkante 23 seines kragenförmigen Abschnittes 22 auf den hohlkegelförmigen Abschnitt 5 der Gehäusebohrung 6 ohne vollständig abzudichten. Die Kugel 11 wird nun aufgrund des auf ihre vom Ventilsitz 4 abgewandte Oberfläche wirkenden Druckes des Mediums vom Hohlkegelsitz 21 des Stützteilbodens 18 abgehoben und bis zur Anlage am Ventilsitz 4 bewegt, so daß das Rückschlagventil 1 jetzt schließt. Es hat sich nun gezeigt, daß diese hydraulisch bewirkte Schließbewegung der Kugel 11 schwingungsarm verläuft.

Das erfindungsgemäße Rückschlagventil kann bevorzugt in hydraulischen Aggregaten Anwendung finden, bei denen es also auf Geräuscharmut, schnelles Öffnen des Ventils und Verschleißarmut des Ventils ankommt. Ein bevorzugtes Anwendungsgebiet für das erfindungsgemäße Rückschlagventil sind Drucksteuerventile in hydraulischen Bremsanlagen mit Blockierschutzregeleinrichtungen und/oder Antriebsschlupfbegrenzungseinrichtungen.

**Patentansprüche**

1. Rückschlagventil (1) mit einem hohlkegelförmigen Ventilsitz (4) in einem eine gleichachsig zu diesem verlaufende Bohrung (6) aufweisenden Gehäuse (2), mit einer dem Ventilsitz zugeordneten Kugel (11) als Schließglied und mit einem die Kugel aufnehmenden, hülsenförmigen Stützteil (12), welches in der Druckmedium enthaltenden Gehäusebohrung gegen die Kraft einer Feder (13) längsgeführt ist und einen Boden (18) mit einem zentrischen Durchbruch (19) sowie einen vom Boden ausgehenden, kragenförmigen Abschnitt (22) aufweist, der die Kugel umfaßt und gegen den Ventilsitz außen kegelförmig verjüngt ist, dadurch gekennzeichnet, daß bei ventilsitzseitig am Gehäuse (2) angreifendem Stützteil (12) die Kugel (11) mit axialem Spiel (s) längsbewegbar im Stützteil aufgenommen ist.

2. Rückschlagventil nach Anspruch 1, dadurch gekennzeichnet, daß das axiale Spiel (s) zwischen der am Ventilsitz (4) in Schließstellung anliegenden Kugel (11) und dem Boden (18) des am Gehäuse (2) angreifenden Stützteils (12) vorzugsweise 0,1 mm beträgt.

3. Rückschlagventil nach Anspruch 2, dadurch gekennzeichnet, daß der Boden (18) des Stützteils (12) einen sich zwischen dem innen kreiszylindrisch begrenzten kragenförmigen Abschnitt (22) und dem Durchbruch (19) in der Bodenmitte erstreckenden Hohlkegelsitz (21) für die Kugel (11) bildet.

4. Rückschlagventil nach Anspruch 1 oder 3, dadurch gekennzeichnet, daß das Stützteil (12) mit seinem kragenförmigen Abschnitt (22) die Kugel (11) ventilsitzseitig bis über den Großkreis (25) umfaßt und unter der Kraft der Feder (13) an einem gleichachsig zum Ventilsitz (4) verlaufenden, hohlkegelförmig begrenzten Abschnitt (5) der Gehäusebohrung (6) anzugreifen vermag ohne zum Gehäuse hin vollständig abzudichten.

5. Rückschlagventil nach Anspruch 1, dadurch gekennzeichnet, daß die Kugel (11) und der Ventilsitz (4) aus Stahl und das Stützteil (12) aus Kunststoff bestehen.

**Europäisches Patentamt**

**EUROPÄISCHER RECHERCHENBERICHT**

Nummer der Anmeldung

**EP 91 10 9248**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 310 018 (PARR ET AL.) <br> – – – – – | | F 16 K 15/04 |
| | | | **RECHERCHIERTE SACHGEBIETE (Int. Cl.5)** <br><br> F 16 K |

Der vorliegende Recherchenbericht wurde für alle Patentansprüche erstellt

| Recherchenort | Abschlußdatum der Recherche | Prüfer |
|---|---|---|
| Den Haag | 11 September 91 | CHRISTENSEN C.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------------------
& : Mitglied der gleichen Patentfamilie, übereinstimmendes Dokument